# EUROPÄISCHE PATENTANMELDUNG

(11) **EP 4 804 062 A1**
(43) Veröffentlichungstag der Anmeldung: **09.09.2026**
(21) Anmeldenummer: 25162223.9
(22) Anmeldetag: 07.03.2025
(51) Int. Cl.: G06F 21/50, G06F 21/57, G06F 21/70, G06F 17/00, G06F 5/00, G01D 3/08, G06F 7/02, G06Q 50/04

(54) **VERFAHREN ZUM EVALUIEREN EINES PRODUKTS**

(71) Anmelder: Siemens Aktiengesellschaft, 80333 München (DE)
(72) Erfinder: Fax, Martin, 90579 Langenzenn (DE); Fries, Steffen, 85598 Baldham (DE); Gaube, Sven, 91413 Neustadt an der Aisch (DE); Görbing, Andrej, 10318 Berlin (DE); Güttinger, Andreas, 90765 Fürth (DE); Hurrelmann, Jonas, 13347 Berlin (DE); Lambio, Marco, 90552 Röthenbach a. d. Pegnitz (DE); Piskol, Thomas, 90556 Seukendorf (DE)
(74) Vertreter: Siemens Patent Attorneys

(57) **Zusammenfassung**

Es wird ein Verfahren beschrieben zum Evaluieren eines Produkts (100), wobei das Produkt (100) zumindest einen Prozessor und/oder einen Speicher aufweist, das Verfahren aufweisend:
i) Erfassen (203) von zumindest einer Messgröße bezüglich des Produkts (100), und basierend hierauf Bereitstellen (205) von zumindest einer Referenzgröße (R), insbesondere auf einer Anbieterseite;
ii) erneutes Erfassen (305) der Messgröße und Vergleichen (306) der erneut erfassten Messgröße mit der zumindest einen Referenzgröße (R),
insbesondere auf einer Anwenderseite; und
iii) Evaluieren des Produktes (100) basierend auf dem Vergleichen (306).

## Beschreibung

### Technisches Gebiet

Die Erfindung bezieht sich auf ein Verfahren zum Evaluieren eines Produkts, wobei das Produkt zumindest einen Prozessor und/oder einen Speicher aufweist, das Verfahren weist auf: Erfassen von zumindest einer Messgröße bezüglich des Produkts, und basierend hierauf Bereitstellen von zumindest einer Referenzgröße; dann erneutes Erfassen der Messgröße und Vergleichen der erneut gemessenen Messgröße mit der zumindest einen Referenzgröße, und Evaluieren des Produktes basierend auf dem Vergleich. Die Erfindung betrifft ferner eine Vorrichtung zur Datenverarbeitung, eingerichtet dieses Verfahren auszuführen.

### Technischer Hintergrund

Die Sicherheit von Produkten (z.B. Geräte oder Gerätekomponenten) ist abhängig von verschiedenen Faktoren. Einer davon ist die Lieferkette, über die zunehmend Angriffe auf Produkte durchgeführt werden. Mögliche Ansätze für solche Angriffe reichen von Manipulationen der Produkte (z.B. durch eingefügte zusätzliche Hardware oder Änderungen in der Software) bis hin zu einem kompletten Austausch von Produkten. Produkte können zur Erkennung von Manipulationen an der Hardware Tamper-Schutzmaßnahmen nutzen oder kryptographische Verfahren, um die Integrität der Firmware/Software sicherzustellen.

Allgemein sind physikalische Schutzmaßnahmen bekannt, die eine erfolgreiche Manipulation erschweren sollen. Dies können Methoden sein, um die Unversehrtheit von Verpackungen oder auch Gehäusen beim Empfänger oder im Betrieb zu prüfen.

Linsen oder bunter Reis kann in einer Vakuumverpackung genutzt werden, um über Mustererkennung herauszufinden, ob eine Verpackung während des Transports geöffnet wurde. Ein ähnlicher Ansatz ist mit Glitzerlack als Schraubensicherung bekannt, bei dem ebenfalls ein Referenzmuster zur Erkennung einer Manipulation dient. Es sind physikalische Tamper-Schutzmaßnahmen von IT-Systemen bekannt, z.B. Siegel oder ein Gehäuseschalter eines PC-Gehäuses oder auch ein Lagesensor für ein Gerät. Dadurch kann ein Öffnen eines Gehäuses erkannt werden. Es ist weiterhin bekannt, eine Alarmanlage in einen Schaltschrank bzw. Server-Schrank einzubauen, um z.B. bei unberechtigtem Öffnen des Schranks oder beim Brechen von Glas (Sichtfenster) einen Alarm auszulösen. Zusätzlich sind spezielle Transportverpackungen bekannt, die über Tamper-Schutzmaßnahmen verfügen können.

Firmware/Software hingegen kann durch digitale Signaturen geschützt werden, um Manipulationen vor der Installation zu erkennen. Dazu wird in der Produktion die FW/SW signiert und die Signatur vor der Installation durch das Gerät geprüft. Allgemein ist eine Attestierung von Softwareeigenschaften bekannt, die Hardware-seitig unterstützt werden kann, bei denen ein Hashwert, der eine bestimmte geladene Software oder den Betriebsstatus eines Gerätes oder auch die Konfiguration eines Gerätes repräsentiert, gegenüber einer weiteren Partei kryptografisch geschützt bestätigt werden kann. Es ist bekannt, auf diese Weise die Integrität eines Dateisystems zu prüfen. Dazu werden Prüfsummen von Dateien berechnet und mit Mustern verglichen. Weiterhin sind Virenscanner bekannt, um bekannte Schadsoftware zu erkennen.

Für verschiedene Produkte sind diese Ansätze jedoch nicht umsetzbar, zum Teil aus Kostengründen oder durch fehlenden technischen Support, insbesondere bei Bestandsprodukten (Legacy). Weil solche Produkte unter anderem auch in kritischen Infrastrukturen eingesetzt werden, kann ein Bedarf bestehen, Manipulation an den Produkten in der Lieferkette zu erkennen.

### Zusammenfassung der Erfindung

Es kann ein Bedarf bestehen, ein Produkt effizient und zuverlässig zu evaluieren, insbesondere hinsichtlich einer Lieferkette.

Ein Verfahren und eine Vorrichtung zur Datenverarbeitung werden im Folgenden beschrieben.

Gemäß einem ersten Aspekt der Erfindung wird ein Verfahren zum Evaluieren (Überwachen, Monitoren, Testen, Verifizieren) eines Produkts beschrieben (z.B. hinsichtlich eines Transport, einer Lieferkette, einer Betriebsweise, etc.), wobei das Produkt zumindest einen Prozessor (z.B. ein Mikroprozessor oder eine CPU) und/oder einen Speicher aufweist, das Verfahren aufweisend:
i) Erfassen/Messen von zumindest einer Messgröße (z.B. interne Messgrößen wie Prozessorfrequenz oder externe Messgrößen wie elektromagnetische Abstrahlung) (z.B. ein Messparameter oder ein Messwert), insbesondere zwei oder mehr Messgrößen, bezüglich des Produkts, und basierend hierauf Bereitstellen (Bestimmen, Berechnen, Definieren) von zumindest einer Referenzgröße (z.B. eine Referenzgröße pro Messgröße oder eine kombinierte Referenzgröße für zwei oder mehr Messgrößen) (insbesondere durchgeführt auf einer Anbieterseite bzw. Herstellerseite);
ii) erneutes Erfassen/Messen der Messgröße und Vergleichen der erneut erfassten Messgröße mit der zumindest einen Referenzgröße (z.B. Vergleichen von einer Messgröße mit einer Referenzgröße, oder Vergleichen von zwei oder mehr Messgrößen mit einer kombinierten Referenzgröße) (insbesondere durchgeführt auf einer Anwenderseite bzw. Kundenseite); und
iii) Evaluieren des Produktes basierend auf dem Vergleichen (z.B. Bemerken eines Hardware/Software-Fehlers und/oder einer Manipulation) (insbesondere Evaluieren der Integrität des Produktes basierend auf dem Vergleich der Referenzwerte mit den gemessenen Werten zur Feststellung einer potentiellen Veränderung des Produktes).

Gemäß einem zweiten Aspekt der Erfindung wird eine Vorrichtung zur Datenverarbeitung beschrieben, insbesondere aufweisend einen Prozessor, eingerichtet zum Ausführen des oben beschriebenen Verfahrens. Eine solche Vorrichtung kann z.B. eine erste Einheit auf Anbieterseite und eine zweite Einheit auf Anwenderseite aufweisen. Beide Einheiten können gekoppelt oder unabhängig voneinander sein. Die Vorrichtung kann mit ein oder mehr Messvorrichtungen (z.B. Sensoren) gekoppelt sein.

Gemäß einem dritten Aspekt der Erfindung wird ein Computerprogrammprodukt beschrieben, welches Befehle aufweist, die bei der Ausführung des Programms durch einen Computer diesen veranlassen das oben beschriebene Verfahren auszuführen.

Im Kontext des vorliegenden Dokumentes kann der Begriff "Produkt" insbesondere eine Vorrichtung, ein Gerät, eine Gerätekomponente, eine Einheit etc. bezeichnen, welche eine gewisse Komplexität aufweist, z.B. einen Prozessor (z.B. ein Mikroprozessor oder eine CPU) und/oder einen Speicher (z.B. ein Speicherbaustein oder eine Festplatte) hat. In einem Ausführungsbeispiel kann das Produkt einen elektrischen/elektronischen Bezug haben. In Ausführungsbeispielen kann ein solches Produkt z.B. ein Controller, ein Endgerät (Laptop, Mobiltelefon, Tablet, etc.) oder ein Schutzgerät sein. In einem Ausführungsbeispiel kann das Produkt konfiguriert sein, eine Software auszuführen. In einem Ausführungsbeispiel ist das Produkt für gewöhnliche Tamper-Schutzmaßnahmen oder kryptografischen Schutz nicht geeignet.

Im Kontext des vorliegenden Dokumentes kann sich der Begriff "Messgröße" (bzw. Messwert, Messparameter, Messbereich) insbesondere auf einen gemessenen (Mess-) Parameter (z.B. eine physikalische Größe) beziehen, welche erfasst bzw. gemessen wird. Eine Messgröße kann z.B. eine physikalische Größe, eine chemische Grüße, eine elektrische Größe, eine technische Größe, etc. sein. In Hinblick auf ein Produkt mit einem Prozessor kann eine Messgröße z.B. die Prozessor-Frequenz oder die Prozessor-Auslastung sein. Bezüglich eines Produkts mit einem Speicher kann eine Messgröße z.B. eine Anzahl von Speicherzugriffen sein. In einem Ausführungsbeispiel können Messgrößen Produkt-intern erfasst werden oder Produkt-extern (z.B. Abstrahlung). Solche Messgrößen können in einem Beispiel durch äußere Einflussfaktoren beeinflusst werden, z.B. einer Temperatur oder Einstrahlung. Unter identischen Messbedingungen wird eine Messgröße in einem Beispiel ein identisches bzw. vergleichbares Messergebnis generieren. Wird das Produkt nicht verändert bzw. manipuliert, so sollten die bezüglich des Produktes erfassten Messgröße im Wesentlichen dieselben oder zumindest vergleichbar sein. Eine Messgröße kann einen spezifischen Wert oder auch einen Bereich (von/bis) bezeichnen.

Im Kontext des vorliegenden Dokumentes kann sich der Begriff "Referenzgröße" (bzw. Referenzwert, Referenzparameter, Referenzbereich) insbesondere auf einen Wert beziehen, der aus ein oder mehr (erfassten) Messgrößen abgeleitet wird bzw. darauf basiert. Eine Referenzgröße kann z.B. ein festgelegter oder normierter Wert sein, der als Vergleichsgröße für Messungen, Bewertungen oder Analysen dienen kann. Eine Referenzgröße kann verwendet werden, um Abweichungen zu erkennen bzw. eine Evaluierung durchzuführen. In einem Ausführungsbeispiel können eine erfasste Messgröße oder ein erfasster Messgrößenbereich als Referenzgröße verwendet werden. Eine erneute Messung der Messgröße bzw. des Messgrößenbereichs kann dann mit der Referenzgröße abgeglichen werden. In einem weiteren Ausführungsbeispiel kann ein Referenzgröße aus zwei oder mehr Messgrößen bzw. Messgrößenbereichen erzeugt werden. Hierbei können unterschiedliche Messgröße z.B. unterschiedlich gewichtet werden. Eine Referenzgröße kann einen spezifischen Referenzwert oder auch einen Referenzbereich bezeichnen.

Im Kontext des vorliegenden Dokumentes kann sich der Begriff "Evaluieren" insbesondere auf eine Analyse, eine Bewertung oder eine Überprüfung bezüglich des Produktes beziehen. Basierend auf einem Vergleich von erneut gemessenen Messgrößen und Referenzgröße(n) kann eine solche Evaluierung stattfinden. In einem Beispiel kann evaluiert werden, ob die Messgröße der Referenzgröße im Wesentlichen entspricht. In einem weiteren Beispiel kann evaluiert werden, ob die erneut gemessene Messgröße in einem Toleranzbereich der Referenzgröße liegt. In einem weiteren Beispiel kann evaluiert werden, ob eine erneut gemessene Messgröße eine tolerierbare Abweichung ist. Basierend auf einem solchen Evaluieren können Schlussfolgerungen bezüglich des Produkts gezogen werden. Beispielsweise kann ein Transport oder eine Lieferkette überprüft werden. Ferner kann eine Funktionsweise oder Performance des Produkts überwacht werden. In einem Ausführungsbeispiel kann mittels des Evaluierens festgestellt werden, ob ein Produkt die vorgesehene Funktionsweise erfüllt oder z.B. manipuliert/beschädigt wurde.

Gemäß einem exemplarischen Ausführungsbeispiel kann die Erfindung auf der Idee basieren, dass ein Produkt effizient und zuverlässig evaluiert werden kann, insbesondere hinsichtlich einer Lieferkette, wenn zunächst Messgrößen erfasst werden und eine Referenzgröße daraus gebildet wird, wobei zu einem späteren Zeitpunkt die Messgrößen erneut erfasst werden und mit der Referenzgröße verglichen werden. Dadurch kann in einfacher und zuverlässiger Weise festgestellt werden, ob das Produkt manipuliert wurde und dadurch die Gefahr besteht, dass es nicht mehr wie spezifiziert und vorgesehen funktioniert.

Das beschriebene Verfahren kann vielseitig einsetzbar sein, um eine Vielzahl unterschiedlicher Produkte zu überwachen, von der Überwachung der Lieferkette bis hin zu einer Überprüfung eines ordnungsgemäßen Betriebs. Konventionelle Verfahren (siehe Diskussion oben) verwenden zusätzliche gegenständliche Schutzmaßnahmen (z.B. bunte Linsen) oder kryptografische Schutzmaßnahmen der Software. Jedoch geben beide Ansätze kein zuverlässiges Gesamtbild des Produkts. Im Gegenteil, die konventionellen Schutzmaßnahmen schützen nur Teilaspekte des Produkts und sind vielen Fällen schlicht nicht anwendbar.

Im Gegensatz zu den existierenden Verfahren werden in einem Ausführungsbeispiel geeignete Testvektoren (z.B. Testparameter, Einflussparameter) und die Messung von physikalischen Parametern (Messgröße) bei der Evaluierung einer Manipulation eines Gerätes (oder einer Komponente) verwendet. Ziel dabei ist es z.B. durch physikalische Veränderungen (von z.B. Temperatur, Spannung, Strom, elektromagnetischen Effekten) zusätzlich eingefügten Code durch veränderte Messgrößen bei der Verarbeitung des Codes zu erkennen. Dazu wird z.B. in der Gerätefertigung eine Referenzgröße von Messgrößen erstellt, z.B. durch Testfälle generiert (Erfassen). Diese Tests werden dann auf Kundenseite ebenfalls durchgeführt (erneutes Erfassen) und gemeinsam mit den Referenzgrößen zur Erkennung von Manipulationen genutzt. Eine größere Abweichung von der Referenzgröße stellt dann z.B. eine mögliche Anomalie (Manipulation) dar.

Ein wesentlicher Vorteil des beschriebenen Verfahrens kann die Anwendbarkeit für Produkte sein, die keine Möglichkeit bieten einen kryptographischen Schutz der Firmware/Software zu realisieren, um potentielle Manipulationen während des Transports und im Betrieb zu erkennen. Das kann insbesondere für Bestandprodukte, die schon eine Weile existieren, interessant sein. Dabei kann das beschriebene Verfahren z.B. zum Schutz der Lieferkette, aber auch im laufenden Betrieb verwendet werden. Je nach Genauigkeit der Messgröße kann das Verfahren für Einzelgeräte/-komponenten oder auch für Geräteklassen verwendet werden.

### Exemplarische Ausführungsbeispiele

Gemäß einem Ausführungsbeispiel weist das Evaluieren auf: Feststellen, ob die erneut erfasste Messgröße der zumindest einen Referenzgröße entspricht. Gemäß einem Ausführungsbeispiel weist das Evaluieren auf: Feststellen, ob die erneut erfasste Messgröße in einem Akzeptanzbereich der zumindest einen Referenzgröße liegt. Dies kann den Vorteil haben, dass die Zuverlässigkeit erhöht werden kann. In vielen Fällen werden erneut erfasste Messgrößen nicht exakt der Referenzgröße entsprechen, auch wenn keine Manipulation durchgeführt wurde. Um hier eine Falschmeldung auszuschließen, kann ein Akzeptanzbereich für die Referenzgröße ermittelt werden, der eine realistische Varianz bei dem erneuten Erfassen berücksichtigt.

Gemäß einem Ausführungsbeispiel weist das Verfahren ferner auf: Bestimmen des Akzeptanzbereichs (Toleranzbereich/Varianzbereich) der zumindest einen Referenzgröße. Gemäß einem Ausführungsbeispiel weist das Verfahren ferner auf: Bestimmen einer (höchst-) Anzahl von akzeptablen falsch(en) (positiven) Messgrößen. Ein solcher Akzeptanzbereich (und/oder die Anzahl an tolerierbaren falschen Messergebnissen) kann auf unterschiedliche Weise erhalten werden, z.B.: Schätzen, Erfahrungsbasiert (auch KIgestützt), Messen unter verschiedenen Bedingungen (siehe Einflussparameter), in Abhängigkeit des geplanten Einsatzes des Produktes.

Gemäß einem Ausführungsbeispiel weist das Evaluieren (des Produktes) und/oder das Bestimmen (der Referenzgröße) das Verwenden von einem Kl-Algorithmus und/oder einem Regelalgorithmus auf. In einem Ausführungsbeispiel kann ein KI Algorithmus trainiert werden, einen Akzeptanzbereich oder einen Referenzbereich zu bestimmen. Basierend auf vorhergehenden Messungen kann dann effizient und zuverlässig evaluiert werden, ob erneut erfasste Messgrößen in Hinblick auf Toleranz/Varianz akzeptabel sind oder nicht.

Gemäß einem exemplarischen Ausführungsbeispiel kann das Generieren der Testfälle (Erfassen/Messen) durch maschinelles Lernen (ML), insbesondere generative KI (GenAl), unterstützt werden, um im Zusammenhang mit den Einflussparametern signifikante Änderungen der Messgröße zu erhalten. Ebenso kann ML bei der Auswertung genutzt werden, um besser falsche positive Ergebnisse erkennen zu können und so die Genauigkeit einer Manipulationserkennung zu erhöhen.

Gemäß einem Ausführungsbeispiel wird die Messgröße Produkt-intern und/oder Produkt-extern erfasst. Während Produkt-interne Messgrößen im Wesentlichen in dem Produkt gemessen werden, betreffen Produkt-externe Messgröße Größen, die durch das Produkt beeinflusst werden können (und z.B. außerhalb des Produktes gemessen werden). Produkt-interne und Produkt-externe Messgröße können daher einen umfassenden Blick auf das Produkt ermöglichen. In einem Ausführungsbeispiel werden bei dem Erfassen Produkt-interne und Produkt-externe Messgröße berücksichtigt (z.B. jeweils zumindest drei).

Gemäß einem Ausführungsbeispiel weist die Produkt-interne Messgröße zumindest einen der folgenden auf: eine Frequenz, insbesondere eine CPU-Frequenz, eine Leistungsaufnahme, eine Auslastung, insbesondere eine CPU-Auslastung, einen Speicherzugriff, insbesondere zeitliche Abhängigkeiten beim Speicherzugriff, einen Netzwerkverkehr, interne Lautstärke durch Lüfter oder angesteuerte mechanische Komponenten, eine Wärmeentwicklung, die Feuchtigkeit im Produkt.

Gemäß einem Ausführungsbeispiel weist die Produkt-externe Messgröße zumindest einen der folgenden auf: eine elektromagnetische Abstrahlung, eine Stromstärke, eine Auswirkung auf gemessene Güte der Stromversorgung (z.B. Frequenz, Frequenzstabilität, Phasenwinkel), Temperatur, Lautstärke (durch Lüfter oder Festplatten oder Relais, ...), oder auch das Gewicht des Produkts.

Gemäß einem Ausführungsbeispiel weist das Verfahren ferner auf: Anwenden von zumindest einem Einflussparameter auf das Produkt, insbesondere während dem Messen. Gemäß einem Ausführungsbeispiel weist der Einflussfaktor zumindest einen der folgenden auf: eine Netzfrequenz, eine Temperatur, einen Druck, eine Luftfeuchtigkeit, eine Einstrahlung. Dies kann den Vorteil haben, dass eine vielseitige bzw. differenzierte Messung durchgeführt werden kann. Beispielsweise können unterschiedliche Einflussfaktoren zu unterschiedlichen Messergebnissen führen, so dass eine Varianz der Messgröße eingeführt werden kann.

In einem exemplarischen Ausführungsbeispiel können externe Einflussparameter genutzt werden, um das Verhalten des Gerätes/der Komponente zu beeinflussen, wie z.B. Netzfrequenz, Temperatur, Luftfeuchtigkeit, Einstrahlung. Dabei können insbesondere die externen Parameter auf Geräteebene über Sensoren gemessen werden. Ebenfalls ist es möglich Einzelkomponenten (z.B. CPU, Ethernet PHYs, WIFI Controller, Speicherbausteine, etc.) zu messen, um genauere bzw. differenzierte Werte zu erhalten. Zusätzlich können die externen Einflussparameter genutzt werden, um die Messgröße zu beeinflussen und Variationen zu generieren.

Gemäß einem Ausführungsbeispiel weist das Verfahren ferner auf: Anwenden von zumindest einem Testparameter (Testprozess, Testbedingung bzw. Messbedingung, etc.) auf das Produkt. Dies kann den Vorteil haben, dass die Messergebnisse unter bestimmten Bedingungen ablaufen und zuverlässig reproduzierbar sind. In einem Ausführungsbeispiel können sich Testparameter auf ein oder mehr Prozesse beziehen, die von dem Produkt (bzw. dem Prozessor) ausgeführt werden, insbesondere während der Messung der Messgröße. Zusätzlich oder alternativ können sich die Testparameter auf Testbedingungen beziehen. In diesem Sinne können die Testbedingungen verwendet werden, um das Erfassen/Messen zu dokumentieren und das erneute Erfassen zuverlässig durchführen zu können. In einem Ausführungsbeispiel kann die Anbieterseite der Anwenderseite neben der Referenzgröße auch entsprechende Testbedingungen (zum Durchführen des erneuten Erfassens) bereitstellen.

Die Referenzgrößen und die Testbedingungen sowie die Testfälle können als Teil der Produktbegleitdokumente z.B. in elektronischer Form (typischerweise als Datenstruktur) geliefert werden. Dabei sind verschiedene Formate möglich, z.B., XML, JSON, YAML, CMS, etc. In einem Beispiel sind die Referenzgrößen und dazugehörigen Testbedingungen kryptographisch gegen Manipulationen geschützt. Dieser Schutz kann z.B. durch digitale Signaturen (klassisch RSA, ECDSA oder auch Post-Quantum Algorithmen wie Falcon, XMSS) über die entsprechenden Informationen realisiert werden.

Gemäß einem Ausführungsbeispiel ist die Referenzgröße ein Referenzwert oder ein Referenzbereich. Gemäß einem Ausführungsbeispiel basiert die zumindest eine Referenzgröße auf einer Messgröße. Gemäß einem Ausführungsbeispiel basiert die zumindest eine Referenzgröße auf zwei oder mehr Messgrößen. Gemäß einem Ausführungsbeispiel sind die zwei oder mehr Messgrößen (bei einem Bilden der Referenzgröße) gewichtet. Abhängig von der erwünschten Anwendung kann eine dieser Vorgehensweisen besonders vorteilhaft sein.

In einem Beispiel kann eine Referenzgröße einer Messgröße entsprechen. Entsprechend können erneut erfasste Messgrößen jeweils mit einer entsprechenden Referenzgröße verglichen werden. In einem anderen Beispiel kann eine Referenzgröße aus mehreren Messgrößen generiert werden. In diesem Fall können mehrere Messgrößen miteinander verrechnet werden (z.B. können machen Messgrößen als relevanter angesehen werden) und mit einer gemeinsamen Referenzgröße verglichen werden.

Gemäß einem Ausführungsbeispiel weist die Referenzgröße auf: eine statische Referenzgröße, insbesondere eine Auslieferungsreferenzgröße. Gemäß einem Ausführungsbeispiel weist die Referenzgröße auf: eine dynamische Referenzgröße, insbesondere eine operative Referenzgröße. Gemäß einem Ausführungsbeispiel verwendet das Vergleichen die statische Referenzgröße und/oder die dynamische Referenzgröße. Dadurch kann die Zuverlässigkeit und Flexibilität des Verfahrens weiter verbessert werden. In einem exemplarischen Ausführungsbeispiel können eine Auslieferungsreferenzgröße (typischerweise fix) und eine operative Referenzgröße (dynamisch) verwendet werden. Beide Referenzgrößen können für den Vergleich kombiniert werden.

Gemäß einem Ausführungsbeispiel weist das Evaluieren zumindest eines der folgenden auf: Detektieren einer Manipulation, Detektieren eines Hardware-Fehlers, Detektieren eines Software-Fehlers, Verifizieren eines Geräts, Verifizieren einer Betriebsweise. Dies kann den Vorteil haben, dass das Verfahrens sehr flexibel für unterschiedliche Zwecke eingesetzt werden kann. Je nach Anwendungen kann eine effiziente und zuverlässige Evaluierung durchgeführt werden.

In einem exemplarischen Ausführungsbeispiel können die Tests (Erfassen/Messen) vor der Inbetriebnahme auf Kundenseite durchgeführt werden, um potentielle Manipulationen zu erkennen. Ebenso können die Tests während der Laufzeit eines Gerätes/einer Komponente durchgeführt werden, um potentielle Manipulationen während des Betriebes zu erkennen.

Eine Abweichung von "Normalwerten" kann genutzt werden, um Anomalien zu erkennen. Im Betrieb können die Geräte in einem "Lernmodus" betrieben werden, um das Normalverhalten in der jeweiligen Betriebsumgebung mit in die Bildung der Referenzgröße einzubeziehen.

Gemäß einem Ausführungsbeispiel weist das Produkt zumindest eines der folgenden auf: ein Schutzgerät, einen Controller, ein Endgerät, ein Bestandsprodukt, eine Festplatte, ein Produkt frei von einem kryptographischen Schutz für Software. Dies ist lediglich eine beispielhafte nicht abgeschlossene Auflistung, um die Flexibilität des beschriebenen Verfahrens zu demonstrieren. Eine Vielzahl von Produkten kann mit dem beschriebenen Verfahren evaluiert werden.

Gemäß einem Ausführungsbeispiel wird das Verfahren bezüglich zumindest einem der folgenden verwendet: einem Transport des Produktes, einer Lieferkette des Produkts, einer Qualitätsprüfung des Produktes, einer Sicherheitsprüfung des Produkts, einer Prüfung im laufenden Betrieb des Produkts.

Gemäß einem Ausführungsbeispiel weist das Verfahren auf: Absichern der Referenzgröße (insbesondere zusammen mit Testparametern/Testbedingungen), insbesondere mittels: (digital) Signieren und/oder Verschlüsseln. Dadurch kann die Sicherheit deutlich erhöht werden.

Gemäß einem Ausführungsbeispiel weist das Verfahren auf: Komplettes oder teilweise Veröffentlichen der Referenzgröße (insbesondere zusammen mit Testparametern), insbesondere konfiguriert als Wertübergabe (call by reference) oder Referenzübergabe (call by value). Hintergrund der Einschränkung ist es in einem Beispiel einem potentiellen Angreifer möglichst wenig Informationen bereitzustellen. Mit dieser Einschränkung kann ein Teil der Referenzgrößen veröffentlicht werden und ein anderer Teil zugriffsgeschützt bereitgestellt werden.

Gemäß einem Ausführungsbeispiel weist das Verfahren auf: Bereitstellen der Referenzgröße (insbesondere mit Testparametern/Testbedingungen) von der Anbieterseite an die Anwenderseite. Dadurch kann das erneute Erfassen zuverlässig und effizient durchgeführt werden.

Gemäß einem Ausführungsbeispiel ist die Anbieterseite einem Hersteller zugeordnet. Gemäß einem Ausführungsbeispiel ist die Anwenderseite einem Kunden zugeordnet.

Gemäß einem Ausführungsbeispiel wird die Produkt-externe Messgröße extern von dem Produkt erfasst, insbesondere mittels einem Sensor. Gemäß einem Ausführungsbeispiel weist das Verfahren auf: Bereitstellen einer Messkammer für das Erfassen und/oder das erneute Erfassen. Eine solche Messkammer kann ein oder mehr Sensoren aufweisen. Ferner kann eine solche Messkammer mit der Vorrichtung zur Datenverarbeitung gekoppelt sein.

Gemäß einem Ausführungsbeispiel weist das (erneute) Erfassen ferner auf: zumindest teilweises Entfernen einer Komponente des Produkts (und Erfassen der Messgröße bezüglich dieser Komponente). Die Effizienz kann erhöht werden, wenn lediglich die relevante Komponente untersucht wird und nicht das ganze Produkt. Gemäß einem Ausführungsbeispiel kann die Komponente zumindest eines aufweisen von: einem Prozessor, einer CPU, einem Ethernet PHYs, einem WiFi Controller, einem Speicher, einer Speicherkomponente, einer Festplatte.

Gemäß einem exemplarischen Ausführungsbeispiel können die vorgeschlagenen Tests (Messen, Evaluieren) für sich genutzt werden, aber auch mit bekannten, kryptographischen Sicherheitsmaßnahmen (z.B. Secure Boot oder auch Attestierung) kombiniert werden. Die vorgeschlagenen Tests können in einer dafür vorbereiteten Vorrichtung (z.B. Messkammer) durchgeführt werden. Diese kann alle notwendigen Sensoren zur Messung und auch zur Beeinflussung enthalten.

Gemäß einem exemplarischen Ausführungsbeispiel werden Testvektoren (z.B. Testbedingungen zum Erfassen der Messgröße) so definiert, dass alle oder bestimmte Verzweigungen im Code durchlaufen werden, um Fehler in der Software zu erkennen. Dieser Ansatz kann für die Erzeugung der Referenzgröße genutzt werden. Dabei können die Tests in einer bestimmten oder auch zufälligen Reihenfolge durchlaufen werden, um damit eine bestimmte Variation der Messgröße zu erhalten, die dann die Referenzgröße (als Referenzbereich) darstellt. Zusätzlich können die Einflussparameter genutzt werden, um die Messgröße zu beeinflussen und Variationen zu generieren. Eine größere Abweichung von dieser Referenzgröße stellt in einem Beispiel eine mögliche Anomalie (Manipulation) dar. Die Referenzgröße ist dabei in einem Beispiel als Zeitreihenwert in Abhängigkeit der Messgröße und Einflussparameter zu verstehen.

Gemäß einem exemplarischen Ausführungsbeispiel kann eine Datenstruktur mit Referenzgröße und Testbedingungen (z.B. von der Anbieterseite an die Anwenderseite) wie folgt aussehen (hier als signiertes JSON Objekt in Form eines JWT):

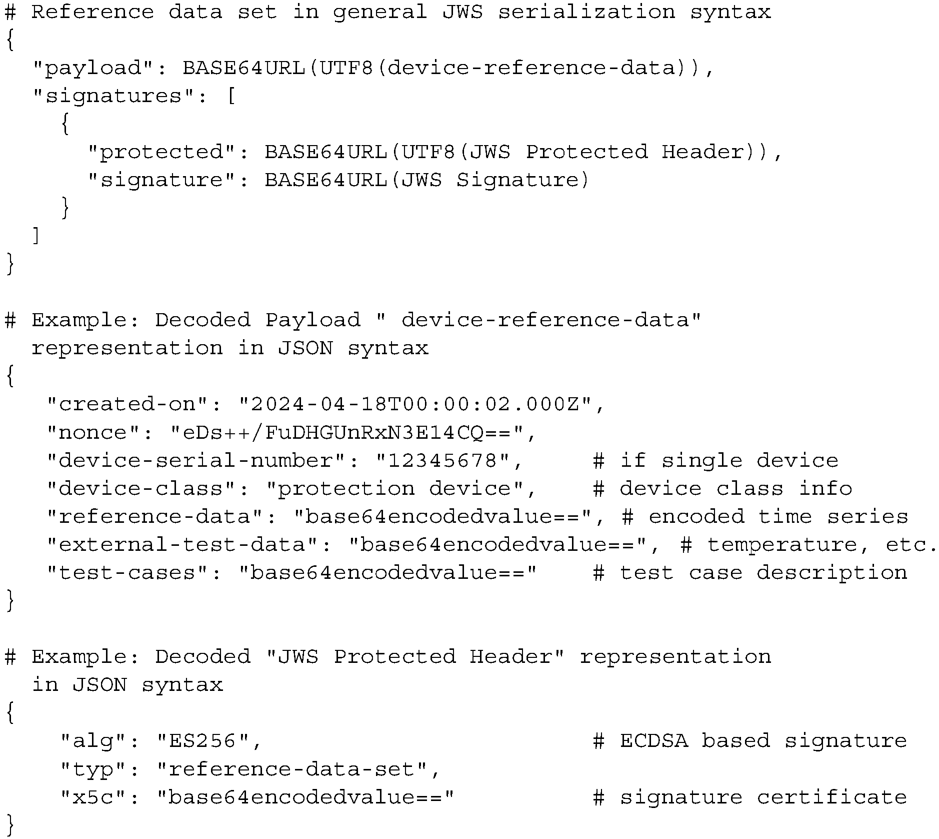

Es ist zu beachten, dass Ausführungsformen der Erfindung unter Bezugnahme auf verschiedene Gegenstände beschrieben wurden. Insbesondere wurden einige Ausführungsformen unter Bezugnahme auf Verfahrensansprüche beschrieben, während andere Ausführungsformen unter Bezugnahme auf Vorrichtungsansprüche beschrieben wurden. Ein Fachmann wird jedoch aus dem Vorstehenden und der folgenden Beschreibung entnehmen, dass, sofern nicht anders angegeben, neben jeder Kombination von Merkmalen, die zu einer Art von Gegenstand gehören, auch jede Kombination von Merkmalen, die sich auf verschiedene Gegenstände beziehen, als von diesem Dokument offenbart gilt. Dies insbesondere auch zwischen Merkmalen der Verfahrensansprüche und Merkmalen der Vorrichtungsansprüche.

Die oben definierten Aspekte und weitere Aspekte der vorliegenden Erfindung ergeben sich aus den nachstehend zu beschreibenden Beispielen der Ausführungsformen und werden unter Bezugnahme auf die Beispiele der Ausführungsformen erläutert. Die Erfindung wird im Folgenden unter Bezugnahme auf Ausführungsformen, auf die die Erfindung jedoch nicht beschränkt ist, näher beschrieben.

### Kurze Beschreibung der Zeichnungen

Figur 1 zeigt schematisch ein Verfahren zum Erfassen von Messgrößen und Bereitstellen von einer Referenzgröße, gemäß einem exemplarischen Ausführungsbeispiel der Erfindung.
Figur 2 zeigt ein Verfahren zum Bereitstellen von einer Referenzgröße auf einer Anbieterseite, gemäß einem exemplarischen Ausführungsbeispiel der Erfindung.
Figur 3 zeigt ein Verfahren zum Vergleichen einer erneut gemessenen Messgröße mit der Referenzgröße auf einer Anwenderseite, gemäß einem exemplarischen Ausführungsbeispiel der Erfindung.

### Detaillierte Beschreibung der Zeichnungen

Die Darstellungen in den Zeichnungen sind schematisch. Es wird darauf hingewiesen, dass in unterschiedlichen Abbildungen ähnliche oder identische Elemente oder Merkmale mit den gleichen Bezugszeichen oder mit Bezugszeichen versehen sind, die sich von den entsprechenden Bezugszeichen nur innerhalb der ersten Ziffer unterscheiden. Um unnötige Wiederholungen zu vermeiden, werden Elemente oder Merkmale, die bereits in Bezug auf eine zuvor beschriebene Ausführungsform erläutert wurden, an einer späteren Stelle der Beschreibung nicht noch einmal erläutert.

Darüber hinaus werden räumlich relative Begriffe wie "vorne" und "hinten", "oben" und "unten", "links" und "rechts" usw. verwendet, um die Beziehung eines Elements zu einem anderen Element zu beschreiben, wie in den Abbildungen dargestellt. So können die räumlich relativen Begriffe auf verwendete Orientierungen zutreffen, die von der in den Abbildungen dargestellten Orientierung abweichen. Offensichtlich beziehen sich diese räumlich relativen Begriffe lediglich auf eine Vereinfachung der Beschreibung und die in den Abbildungen gezeigte Orientierung und sind nicht notwendigerweise einschränkend, da eine Vorrichtung gemäß einer Ausführungsform der Erfindung andere Orientierungen als die in den Abbildungen dargestellten annehmen kann, insbesondere wenn sie verwendet wird.

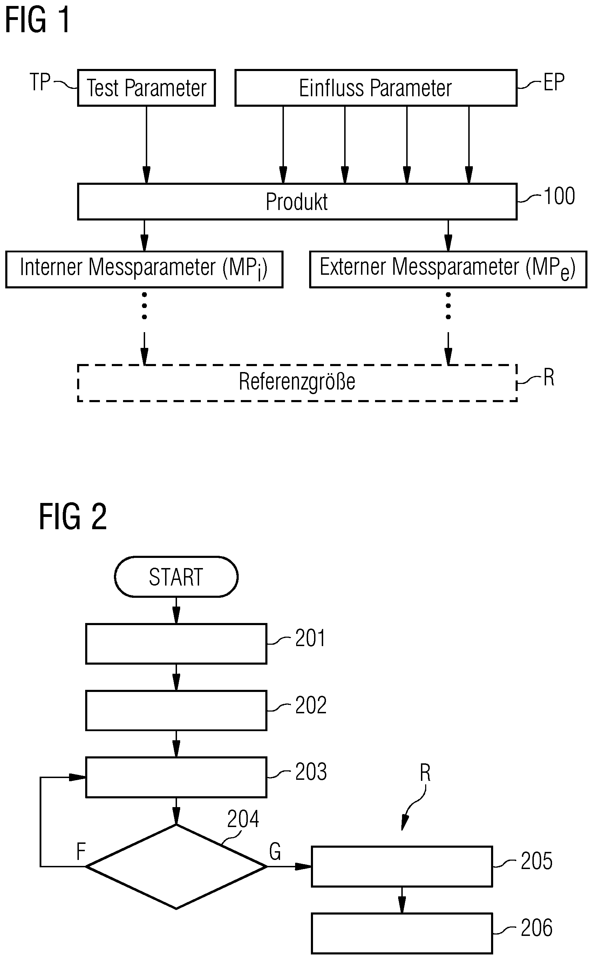

**Figur 1** zeigt schematisch ein Verfahren zum Erfassen von Messgrößen und Bereitstellen von einer Referenzgröße, gemäß einem exemplarischen Ausführungsbeispiel der Erfindung. Das Produkt 100 weist in diesem Beispiel einen Prozessor und einen Speicher auf (nicht gezeigt) und ist z.B. als Schutzgerät ausgebildet. Für ein Erfassen einer Mehrzahl von Messgrößen bezüglich des Produkts 100 werden Testparameter TP verwendet, z.B. unterschiedliche Prozesse, die das Produkt 100 ausführen soll. Ferner können die Testparameter Messbedingungen angeben, um das Reproduzieren der Messung zu ermöglichen. Zusätzlich werden Einflussparameter EP eingesetzt, um das Produkt 100 auf unterschiedliche Weise zu beeinflussen, z.B. durch Temperatur, Druck, Strahlung, Feuchtigkeit, etc.

Das Produkt 100 wird unter (variierenden) Testparametern TP und/oder (variierenden) Einflussparametern EP getestet, indem Messgrößen erfasst werden. Dies kann z.B. in einer speziellen Messkammer/Messumgebung mit entsprechender Sensorik durchgeführt werden. Im vorliegenden Beispiel werden interne Messgrößen MPi und externe Messgrößen MPi erfasst. Erstere umfassen z.B. CPU Verwendung und Frequenz, Speicherverwendung, Netzwerkverkehr, etc. Letztere umfassen z.B. Energieverbrauch im allgemeinen, Energieverbrauch Variabilität, Frequenzeinfluss, Strahlung, etc. Anhand der erfassten Messgrößen MPi und MPe können dann ein oder mehr Referenzgrößen R gebildet werden. Die ein oder mehr Referenzgrößen R kann/können in einem zukünftigen Verfahrensschritt mit erneut erfassten Messgrößen MPi, MPe abgeglichen werden.

**Figur 2** zeigt ein Verfahren zum Bereitstellen von einer Referenzgröße, gemäß einem exemplarischen Ausführungsbeispielen der Erfindung. Der Ablaufplan von Figur 2 beschreibt die Testfallgenerierung als Teil der Produktion, um eine Referenzgröße zu erhalten. Die Referenzgröße wird am Ende gemeinsam mit den Testdaten digital signiert. Im gezeigten Beispiel werden folgende Schritte durchgeführt:
- 201:: Erfassung von Software-Komponenten aus dem Asset Management.
- 202:: Generieren oder Einlesen von Testfällen (Testparameter) für die Kombination von Software-Komponenten.
- 203:: Durchführen der Testfälle (Erfassen) mit variierenden Operationsparametern.
- 204:: Bestimmen der Referenzgrößen Qualität, hierbei:
- F:: failure, nicht genügend
- G:: good, genügend
- 205:: Speichern der Referenzgröße R und der Testbedingungen.
- 206:: Digitales Signieren des Datenbündels (mit Referenzgröße und Testbedingungen).

Ein solches digital signiertes Datenbündel (Referenzgröße und Messbedingungen) kann z.B. von der Anbieterseite (Hersteller) der Anwenderseite (Kunde) übermittelt werden. Der Anwender kann unter den genannten Messbedingungen ein erneutes Erfassen der Messgröße durchführen und die Ergebnisse dann mit der Referenzgröße vergleichen.

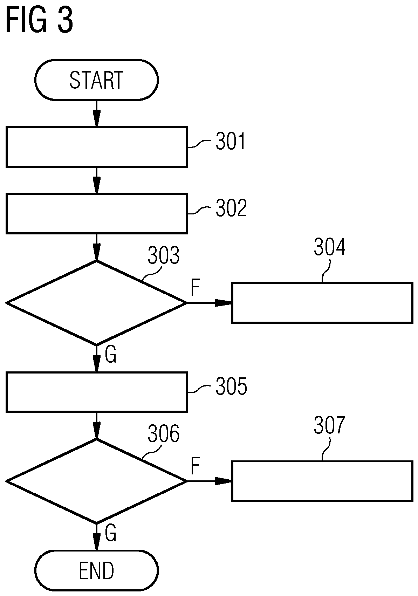

**Figur 3** zeigt ein Verfahren zum Vergleichen erneut erfasster Messgrößen mit der Referenzgröße aus Figur 2, gemäß weiteren exemplarischen Ausführungsbeispielen der Erfindung. Auf der Anwenderseite kann unter gleichen/ähnlichen Messbedingungen ein erneutes Erfassen durchgeführt werden, und die erhaltenen Messgrößen können mit der Referenzgröße abgeglichen werden. Dazu wird in diesem Beispiel die in Figur 2 erzeugte digitale Signatur der Referenzdaten geprüft und im Erfolgsfall werden die Testdaten bzw. Testbedingungen eingelesen. Im gezeigten Beispiel werden folgende Schritte durchgeführt:
- 301:: Erfassung von Software-Komponenten aus dem Produkt-Pass.
- 302:: Einlesen der Testfälle (Testbedingungen und Referenzgrößen).
- 303:: Verifizieren der digitalen Signatur.
- 304:: Erzeugen einer Fehlermeldung wenn nicht verifiziert.
- 305:: Durchführen von Testfällen mit variierenden Operationsparametern (erneutes Erfassen).
- 306:: Vergleichen mit der Referenzgröße:
- F:: failure, Speichern als Referenzgröße und Testbedingungen.
- G:: good, Erfolg, kann beendet werden.

Die folgende Evaluierung kann zu folgendem Ergebnis kommen: im Falle von F kann z.B. von einer Manipulation des Produkts ausgegangen werden, während im Falle von G alles in Ordnung zu sein scheint, z.B. das Produkt in der Lieferkette nicht manipuliert wurde.

Unabhängig vom grammatikalischen Geschlecht eines bestimmten Begriffes sind Personen mit männlicher, weiblicher oder anderer Geschlechtsidentität mit umfasst.

## Patentansprüche

1. Ein Verfahren zum Evaluieren eines Produkts (100), wobei das Produkt (100) zumindest einen Prozessor und/oder einen Speicher aufweist, das Verfahren aufweisend:
Erfassen (203) von zumindest einer Messgröße bezüglich des Produkts (100), und basierend hierauf Bereitstellen (205) von zumindest einer Referenzgröße (R),
insbesondere auf einer Anbieterseite;
erneutes Erfassen (305) der Messgröße und Vergleichen (306) der erneut erfassten Messgröße mit der zumindest einen Referenzgröße (R),
insbesondere auf einer Anwenderseite; und
Evaluieren des Produktes (100) basierend auf dem Vergleichen (306).

2. Das Verfahren gemäß Anspruch 1, wobei das Evaluieren aufweist:
Feststellen, ob die erneut erfasste Messgröße der zumindest einen Referenzgröße (R) entspricht; und/oder
Feststellen, ob die erneut erfasste Messgröße in einem Akzeptanzbereich der zumindest einen Referenzgröße liegt.

3. Das Verfahren gemäß Anspruch 1 oder 2, ferner aufweisend:
Bestimmen des Akzeptanzbereichs der zumindest einen Referenzgröße (R); und/oder
Bestimmen einer Anzahl von akzeptablen unpassenden Messgrößen.

4. Das Verfahren gemäß einem der vorhergehenden Ansprüche,
wobei das Evaluieren des Produkts (100) und/oder das Bestimmen (205) der Referenzgröße (R) das Verwenden von einem Kl-Algorithmus und/oder einem Regelalgorithmus aufweist.

5. Das Verfahren gemäß einem der vorhergehenden Ansprüche,
wobei die Messgröße einen Produkt-internen Messparameter (MPi) und/oder einen Produkt-externen Messparameter (MPe) aufweist.

6. Das Verfahren gemäß Anspruch 5,
wobei der Produkt-interne Messparameter (MPi) zumindest eines der folgenden aufweist:
eine Frequenz, insbesondere eine CPU-Frequenz, eine Auslastung, insbesondere eine CPU-Auslastung, einen Speicherzugriff, zeitliche Abhängigkeiten beim Speicherzugriff, einen Netzwerkverkehr, interne Lautstärke, insbesondere durch Lüfter oder angesteuerte mechanische Komponenten, eine Wärmeentwicklung, die Feuchtigkeit im Produkt.

7. Das Verfahren gemäß Anspruch 5 oder 6,
wobei der Produkt-externe Messparameter (MPe) zumindest eines der folgenden aufweist:
eine elektromagnetische Abstrahlung, eine Stromstärke, eine Leistungsaufnahme, ein Frequenzverhalten, ein zeitliches Stromverhalten, ein zeitliches Spannungsverhalten, eine Auswirkung auf gemessene Güte der Stromversorgung, eine Temperatur, eine externe Lautstärke, das Gewicht des Produkts.

8. Das Verfahren gemäß einem der vorhergehenden Ansprüche, ferner aufweisend:
Anwenden von zumindest einem Einflussparameter (EP) auf das Produkt (100), insbesondere während dem Erfassen (203, 305),
insbesondere wobei der Einflussparameter (EP) zumindest eines der folgenden aufweist: eine Netzfrequenz, eine Temperatur, eine Luftfeuchtigkeit, eine Einstrahlung;
und/oder
Anwenden von zumindest einem Testparameter (TP), insbesondere einem Testprozess und/oder einer Testbedingung, auf das Produkt (100).

9. Das Verfahren gemäß einem der vorhergehenden Ansprüche,
wobei die zumindest eine Referenzgröße (R) auf einer Messgröße basiert; oder
wobei die zumindest eine Referenzgröße (R) auf zwei oder mehr Messgrößen basiert, insbesondere wobei die zwei oder mehr Messgrößen gewichtet werden.

10. Das Verfahren gemäß einem der vorhergehenden Ansprüche, wobei die Referenzgröße (R) aufweist:
eine statische Referenzgröße, insbesondere eine Auslieferungsreferenzgröße; und/oder
eine dynamische Referenzgröße, insbesondere eine operative Referenzgröße; insbesondere wobei das Vergleichen (306) die statische Referenzgröße und/oder die dynamische Referenzgröße verwendet.

11. Das Verfahren gemäß einem der vorhergehenden Ansprüche,
wobei das Evaluieren zumindest eines der folgenden aufweist: Detektieren einer Manipulation, Detektieren eines Hardware/Software-Fehlers, Verifizieren eines Produkts, Verifizieren einer Betriebsweise.

12. Das Verfahren gemäß einem der vorhergehenden Ansprüche,
wobei das Produkt (100) zumindest eines der folgenden aufweist: ein Schutzgerät, einen Controller, ein Endgerät, ein Bestandsprodukt, eine Festplatte, ein Produkt frei von einem kryptographischen Schutz für Software.

13. Das Verfahren gemäß einem der vorhergehenden Ansprüche,
wobei das Verfahren bezüglich zumindest einem der folgenden verwendet wird: einem Transport des Produktes, einer Lieferkette des Produkts, einer Qualitätsprüfung des Produktes, einer Sicherheitsprüfung des Produkts, einer Prüfung im laufenden Betrieb des Produkts.

14. Das Verfahren gemäß einem der vorhergehenden Ansprüche, ferner aufweisend zumindest eines der folgenden Merkmale:
Absichern der Referenzgröße, insbesondere mittels zumindest einem von: Signieren, Verifizieren, Verschlüsseln, Entschlüsseln;
Veröffentlichen der Referenzgröße, insbesondere konfiguriert als Wertübergabe oder Referenzübergabe;
Bereitstellen der Referenzgröße von der Anbieterseite an die Anwenderseite;
wobei die Anbieterseite einem Hersteller zugeordnet ist;
wobei die Anwenderseite einem Kunden zugeordnet ist;
wobei der Produkt-externe Messparameter (MPe) extern von dem Produkt (100) erfasst wird, insbesondere mittels einem Sensor;
wobei das Erfassen (203, 305) ferner aufweist: zumindest teilweises Entfernen einer Komponente des Produkts (100),
insbesondere zumindest eines von einem Prozessor, einer CPU, einem Ethernet PHYs, einem WiFi Controller, einem Speicher, einer Speicherkomponente, einer Festplatte; Bereitstellen einer Messkammer für das Erfassen und/oder das erneute Erfassen.

15. Eine Vorrichtung zur Datenverarbeitung, eingerichtet, um das Verfahren gemäß einem der vorhergehenden Ansprüche auszuführen.
